# EUROPEAN PATENT SPECIFICATION

(11) **EP 3 804 509 B1**
(45) Date of publication and mention of the grant of the patent: **03.08.2022**
(21) Application number: 20199969.5
(22) Date of filing: 03.10.2020
(51) Int. Cl.: A01K 5/02

(54) **AUTOMATIC FEEDER**
AUTOMATISCHE ZUFÜHRVORRICHTUNG
DISPOSITIF D'ALIMENTATION AUTOMATIQUE

(30) Priority: 11.10.2019 FI 20194134 U; 13.01.2020 SE 2050012
(43) Date of publication of application: 14.04.2021
(73) Proprietor: Horse Haytec Oy, 04390 Jäniksenlinna (FI)
(72) Inventor: YLI-PIIPARI, Reino, 04390 Jäniksenlinna (FI)
(74) Representative: Salomäki, Juha Kari Ensio

(56) References cited:
- AT-U1- 13 443
- CA-A1- 2 518 686
- NL-B1- 2 015 308

## Description

The invention relates to an automatic feeder as defined in the preamble of claim 1.

The feeder according to the invention, hereafter also referred to as the solution according to the invention, is especially suitable to be used for automatic feeding of horses at given intervals.

The primary feed for horses is hay. A known solution for feeding horses with hay is a cage-like covered feeder, for example, capable of accommodating a hay bale and allowing the horses to go and eat hay therefrom. However, horses should not eat too much hay in order to not get fat. Moreover, they should eat hay regularly at given intervals. Irregular eating of hay contributes to an increased risk of ulcer in horses. Thus, the amount of hay given as a feed to horses and the feeding times should be regulated.

As known, there are different kinds of feeders and solutions for feeding horses with hay. A known solution is to manually give the horses a sufficient amount of hay at appropriate intervals. However, this is time-consuming and hard work. There are also feeders where the hay is provided, for example, in a cage, or some other space, having one or more doors or hatches, the doors and hatches being adapted to open at given intervals for a given time period to allow the horses to get hay as desired. If the doors and hatches must be opened manually, this is time-consuming for the person(s) responsible for the feeding and also increases the risk of errors in regulating the amount of hay. Solutions where the hatches of the feeder are adapted to automatically open and close at given intervals and for a desired time period are also known. However, the current solutions of this type are complicated, and, therefore, expensive and also subject to different malfunctions.

Examples of feeders of the prior art include those disclosed in AT 13443 U1, CA 2518686 A1 and NL 2015308 B1.

The invention aims at eliminating the above-mentioned drawbacks of the prior art by providing a simple, inexpensive and operationally reliable automatic feeder. The feeder according to the invention is defined in claim 1 and is characterized in what is set forth in the characterizing part of claim 1. Other embodiments of the invention are characterized in what is set forth in the rest of the claims.

An advantage of the solution according to the invention is that it allows horses to be automatically fed at desired intervals. The amount of work required by this automatic feeder, compared to manual feeding, or to the amount of work required by a hand-operated feeder, is significantly smaller. Another advantage is that the feeder according to the invention is simple in structure, and, therefore, has low costs. Besides, as a result of its simple structure, the feeder only includes a low number of parts susceptible to breakage. Another advantage is that the parts of the feeder are low-price, making it inexpensive to replace any broken part with a new one. Another advantage of the solution is that its flexible and modular structure allows feeding cages or the like, which already are in use, to be automated in a cost-efficient manner. Another advantage is that the flexible and modular structure of the feeder allows it to be easily modified as needed.

In the following, the invention will be explained in more detail by means of one exemplifying embodiment, with reference to the accompanying drawings wherein
- Figure 1: is an oblique simplified lateral and top view of a feeder applying the solution according to the invention,
- Figure 2: is an oblique simplified lateral and top view of the feeder of Figure 1, at an initial stage of opening the feeding space of the feeder,
- Figure 3: shows the next step of the opening of the feeding space of the feeder,
- Figure 4: shows a situation where the feeding space of the feeder is completely opened,
- Figure 5: is a simplified schematic lateral and partially cross-sectional view of the feeder shown in Figure 1,
- Figure 6: is a simplified schematic lateral and partially cross-sectional view of the situation shown in Figure 2,
- Figure 7: is a simplified schematic lateral and partially cross-sectional view of the situation shown in Figure 3,
- Figure 8: is a simplified schematic lateral and partially cross-sectional view of the situation shown in Figure 4,
- Figure 9: is a simplified schematic partially cross-sectional top view of the feeder shown in Figure 1,
- Figure 10a: is a simplified schematic lateral view of the operation of a coupler included in the solution according to the invention,
- Figure 10b: is a simplified schematic lateral view of the operation of the coupler included in the solution according to the invention, and
- Figure 10c: is a simplified schematic lateral view of the operation of the coupler included in the solution according to the invention.

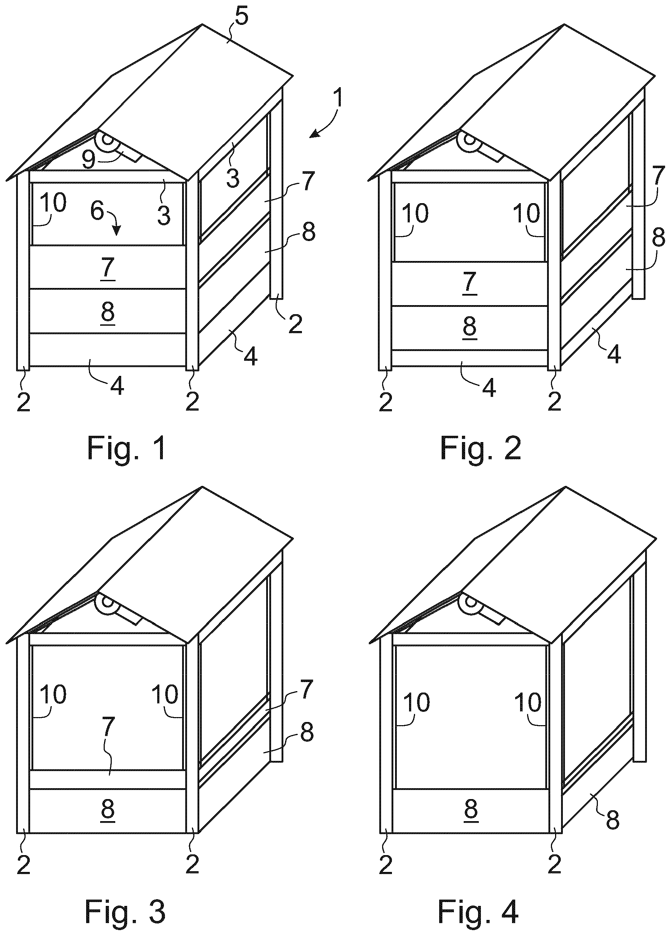

Figure 1 is an oblique simplified lateral and top view of a feeder applying the solution according to the invention and especially intended for feeding horses. In this solution, the feeder consists of a frame structure 1 comprising, in this exemplary embodiment, four corners provided with vertical posts and four horizontal beams interconnecting the adjacent vertical posts 2 at their tops. In addition, plinth elements 4 of suitable height are fitted between the lower portions of the adjacent vertical posts 2. Further, the frame structure 1 is covered by a roof 5. The area defined by the adjacent vertical posts 2 of the frame structure 1 forms a feeding space 6 from which horses can eat hay placed therein. In this exemplary embodiment, the feeder is a sort of feeding shelter.

Figure 1 shows two walls between the vertical posts 2 of the feeder, each of them having two wall boards fitted between the vertical posts 2. These wall boards are adapted to act as closing elements 7 and 8 for the feeding space 6. In the situation shown in Figure 1, the closing elements 7 and 8 are in their upper position where they, and the plinth elements 4, prevent access to the feeding space 6. The closing elements 7 and 8 are adapted to close and open by a power means 9, such as an electric motor. The upper i.e. the first closing element 7 is suspended and carried from above by suspension means 10 constituted by ropes or similar means suitable for the purpose. The lower i.e. the second closing element 8 is connected to the first closing element 7 by couplers and the power means 9 is adapted to move the closing elements 7 and 8 up and down carried by the suspension means 10. The operation of the closing elements 7 and 8 will be described in more detail below.

The feeder according to the invention is provided for automated regulation of the feeding of horses. The feeder includes a control system adapted to control the operation of the feeder by opening the feeding space 6 at given intervals and for a given time period. This allows the feeding of the horses to be automatically regulated. The feeding space 6 is adapted to open, for example, at 2 to 4 hour intervals, preferably at intervals of about 3 hours, for a time period of 10 to 60 minutes or 10 to 30 minutes, for example, preferably for a time period of about 20 minutes.

Figure 2 is an oblique simplified lateral and top view of the feeder of Figure 1, at an initial stage of opening the feeding space 6 of the feeder. In the situation shown in Figure 2, the closing elements 7 and 8 have both moved downwards, from their upper position, over an equal distance, carried by the suspension means 10. The second closing element 8 has moved to a position partly in front of the plinth element 4. The closing elements 7 and 8 are adapted to move downwards partly by gravity and in a controlled manner by means of the power means 9 controlled by the control system.

In Figure 3 shows the next step of the opening of the feeding space 6 of the feeder. Now, the second closing element 8 has moved to its lower position in front of the plinth element 4, close to the lower ends of the vertical posts 2. The couplers of the first closing element 7 have decoupled from the second closing element 8 and the first closing element 7 is still moving downwards, to a position behind the second closing element 8, carried by the suspension means 10.

Figure 4 shows a situation where the feeding space 6 of the feeder is completely opened. Now, the first closing element 7 has also moved to its lower position behind the second closing element 8, close to the lower ends of the vertical posts 2. As the feeding space 6 starts to close, the power means 9 is adapted to lift the first closing element 7 upwards by means of the suspension means 10, and, as the lower edge of the first closing element 7 substantially lies at level with the upper edge of the second closing element 8, the couplers couple to coupler counterelements provided on the second closing element 8, causing the second closing element 8 to rise upwards as well. The feeder comprises means adapted to detect when the first closing element 7 has risen to its upper position, the power means 9 being adapted to stop the lifting of the closing elements at this point. These means include, for example, one or more sensors, switches or similar detecting means preferably connected to the control system of the feeder.

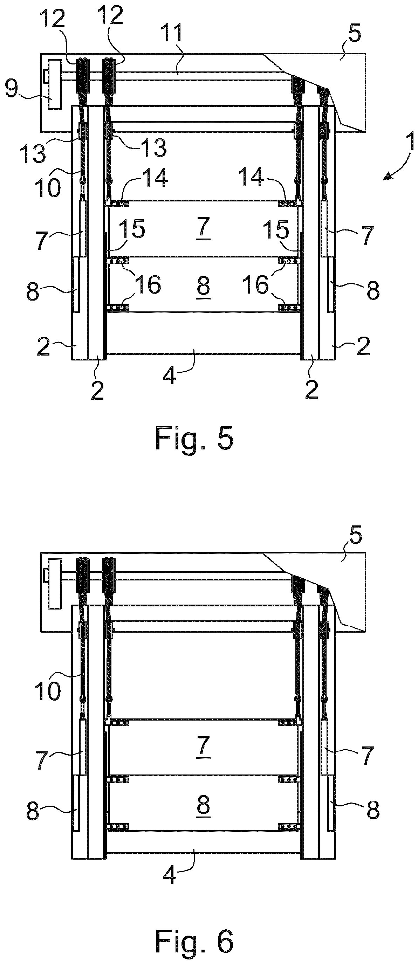

Figure 5 is a simplified schematic lateral and partially cross-sectional view of the feeder of Figure 1. For clarity, Figure 5 does not show all the parts of the feeder and the parts shown in the figure are simplified and not to scale. In this embodiment of the invention, three walls of the feeding space of the feeder are adapted to be open and close by means of the closing elements 7 and 8. Similarly to the situation shown in Figure 1, the closing elements 7 and 8 are in their upper position in Figure 5.

The power means 9 is an electric motor, for example, and provided underneath a first end of the roof 5 and connected to a transmission means 11, such as a shaft positioned below the center of the roof ridge. The transmission means 11 is adapted to act like a power shaft, transmitting an equal power to any parts of the feeder in need thereof. Preferably four transmission members 12, later, more briefly, rope pulleys 12, converting a rotational motion to a linear motion, are connected to the transmission means 11, each of them having two ropes, acting as the suspension means 10, attached, at their first end, thereto. Two diverting pulleys are provided at each upper corner of the frame structure 1 and each suspension means 10 is guided, from the rope pulley 12, to run over one diverting pulley 13, and therefrom downwards, to the first closing element 7, the second end of one of the suspension means 10 being attached to the upper corner of each first closing element 7, or in proximity thereof.

The first ends of the suspension means 10 are attached to the rope pulleys 12 in such a way that each closing element 7 moves up and down, carried by the suspension means 10, simultaneously and the same speed and staying in a substantially horizontal position.

Steering means 14, to which the suspension means 10 are connected to at their second ends, are provided in the upper corners of each first closing element 7, the steering means 14 being fitted in substantially vertical guiding means 15 fixed to the vertical posts 2. The second closing elements 8 have their own steering means 16 fitted in the same guiding means 15 as the steering means 14 of the corresponding first closing elements 7. The guiding means 15 and the steering means 14 and 16 are adapted to steer the up and down movement of the closing elements 7 and 8.

Figure 6 is a simplified schematic lateral and partially cross-sectional view of the situation shown in Figure 2. The closing elements 7 and 8 have both moved downwards from their upper position, over an equal distance, carried by the suspension means 10. The second closing element 8 has moved to a position partly in front of the plinth element 4.

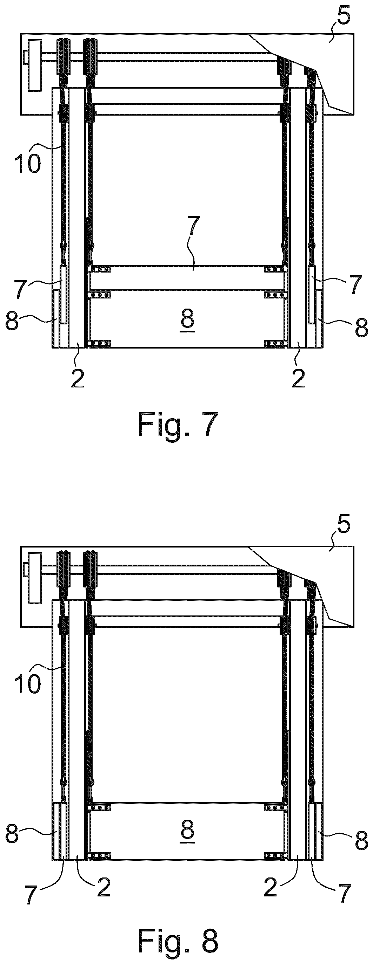

Figure 7 is a simplified schematic lateral and partially cross-sectional view of the situation shown in Figure 3. Now, the second closing element 8 has moved to its lower position in front of the plinth element 4, close to the lower ends of the vertical posts 2. The couplers of the first closing element 7 have decoupled from the second closing element 8 and the first closing element 7 is still moving downwards, to a position behind the second closing element 8, carried by the suspension means 10.

Figure 8 is a simplified schematic lateral and partially cross-sectional view of the situation shown in Figure 4. Now, the first closing element 7 has also moved to its lower position behind the second closing element 8, close to the lower ends of the vertical posts 2.

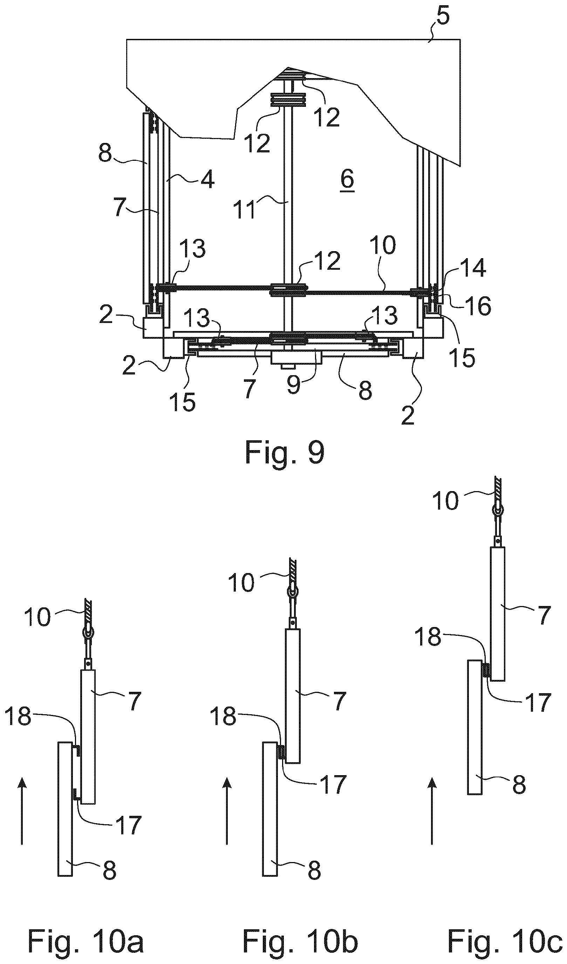

Figure 9 is a simplified schematic top and partially cross-sectional view of the feeder of Figure 1. For clarity, Figure 9 does not show all the parts of the feeder and the parts shown in the figure are simplified and not to scale. In the situation shown in Figure 9, the feeding space 6 is open because the closing elements 7 and 8 have been lowered. The power means 9 is adapted to rotate the power shaft acting as the transmission means 11 and having the four rope pulleys 12 connected thereto. Each rope pulley 12 is provided with two rope grooves into which ropes, acting as the suspension means 10 and adapted carry and move the closing elements 7 and 8, are fitted. The suspension means 10 are guided from the rope pulley 12 to run over the diverting pulleys 13 and therefrom to the first closing elements 7 to which the second ends of the suspension means 10 are connected. The diverting pulleys 13 are attached to suitable points on the frame structure of the feeder, for example. However, for the clarity of Figure 9, it does not show the attachment of the diverting pulleys 13 in any more detail.

As mentioned above, since the steering means 14 and 16 of the closing elements 7 and 8 are fitted in the guiding means 15, they do not move substantially in the horizontal direction as the closing elements 7 and 8 move vertically. Preferably, each guiding means 15 is a U-shaped rail in profile.

Figures 10a, 10b and 10c are simplified schematic lateral views of the operation of a coupler included in the solution according to the invention. One or more couplers 17 are provided at the lower portion of the first closing element 7 while one or more counterelements 18 are provided at the top portion of the second closing element 8. The coupler 17 provided at the lower portion of the first closing element 7 is adapted to couple to the counterelement 18 provided at the top portion of the second closing element 8 as the lower edge of the first closing element 7, during its rise, reaches the upper edge of the second closing element 8. Then, the first closing element 7 couples to the second closing element 8 which also starts to rise upwards. The coupler 17 and its counterelement 18 are hook-shaped parts or the like, suitably matching each other, for example.

It will be appreciated by a person skilled in the art that the different embodiments of the invention are not solely restricted to the examples above but may vary within the scope of the accompanying claims. Thus, the structure and operation of the feeder, for example, may differ from the above. As an example, the closing elements provided in one wall are not necessarily two in number but they can be one or three in number, for instance.

It will also be appreciated by the person skilled in the art that, in the example embodiment of the invention presented above, the first counter element can move in front of the second counter element when opening the feeding space, instead of the first counter element moving behind the second counter element.

It will also be appreciated by the person skilled in the art, that to open the feeding space, the counter elements are moved upwards and to close the feeding space the counter elements are moved downwards, not vice versa.

It will also be appreciated by the person skilled in the art that the openable and closable walls of the four-cornered feeding shelter i.e. the feeder described above are not necessarily four in number but they can be one, two, three or even more than four in number.

It will also be appreciated by the person skilled in the art that the solution according to the invention is applicable to feeders differing from the four-cornered feeding shelter presented above.

It will also be appreciated by the person skilled in the art that the suspension means, instead of ropes, can be belts, chains or some other means suitable for the purpose. Thus, the transmission means converting a rotational motion to a linear motion, instead of rope pulleys, can also be belt pulleys or chain pulleys or some other transmissions means suitable for the purpose, for instance.

It will also be appreciated by the person skilled in the art that the four rope pulley feeder may comprise more rope pulleys, preferably one rope pulley for each suspension means, for instance. In this case, the solution according to the invention has eight single-groove rope pulleys instead of four double-groove pulleys.

It will also be appreciated by the person skilled in the art that the solution according to the invention is applicable to the feeding of other animals than horses.

## Claims

1. An automatic feeder comprising at least a frame structure (1) and a feeding space (6) inside the frame structure (1) for an animal feed, such as hay, **characterized in** the feeder having one or more of its sides adapted to be opened and closed by at least a first closing element (7) and a second closing element (8), the automatic feeder further comprising a power means (9) for moving the first and second closing elements (7, 8), the first and second closing elements (7, 8) being adapted to open and close the feeding space (6), and the feeder comprises a transmission means (11) adapted to transmit power produced by the power means (9) in order to move each first and second closing element (7, 8), and the transmission means (11) is connected to the power means (9) and comprises a rotatable shaft having one or more transmission members (12) converting a rotational motion to a linear motion attached thereto which have one or more suspension means (10), each attached to one of the first closing elements (7) at one end thereof, connected thereto, and **in that** the first and second closing elements (7, 8) are adapted to be moved vertically, simultaneously, in the same direction and at the same speed, by one and the same transmission means (11) and the suspension means (10), wherein each of the first closing elements (7) is suspended and carried from above by their suspension means (10) and the first closing elements (7) are provided at their lower portion with one or more couplers (17) and the second closing elements (8) are provided at their top portion with one or more counterelements (18), and the couplers (17) are arranged to couple with the counterelements (18) as the lower edge of the first closing element (7), during its rise, reaches the upper edge of the second closing element (8) in such a way that the first closing elements (7) take the second closing elements (8) along when the first closing elements (7) are moved upwards when the couplers (17) hit the counterelements (18), and the couplers (17) are arranged to decouple from the counterelements (18) when the first closings elements (7) are moved downwards when the second closing elements (8) reach their lower position.

2. A feeder as defined in claim 1, **characterized in that** the feeder comprises guiding means (15), and the closing elements (7, 8) are provided with steering means (14, 16) adapted to fit into the guiding means (15) and to steer the vertical movement of the closing elements (7, 8).

3. A feeder as defined in claim 1 or 2, **characterized in that** the feeder comprises a control system adapted to automatically open and close the feeding space (6) at given moments of time by means of the power means (9), the transmission means (11) and the closing elements (7, 8).

4. A feeder as defined in any of the preceding claims, **characterized in that** the frame structure (1) is a covered four-cornered structure having one or more of its sides adapted to be opened and closed by the closing elements (7, 8).

## Patentansprüche

1. Automatische Fütterungsvorrichtung, umfassend mindestens eine Rahmenstruktur (1) und einen Fütterungsraum (6) innerhalb der Rahmenstruktur (1) für ein Tierfutter, wie etwa Heu, **dadurch gekennzeichnet, dass** die Fütterungsvorrichtung eine oder mehrere ihrer Seiten aufweist, die angepasst sind, um durch mindestens ein erstes Schließelement (7) und ein zweites Schließelement (8) geöffnet und geschlossen zu werden, die automatische Fütterungsvorrichtung ferner umfassend ein Leistungsmittel (9) zum Bewegen des ersten und des zweiten Schließelements (7, 8), wobei das erste und das zweite Schließelement (7, 8) angepasst sind, um den Fütterungsraum (6) zu öffnen und zu schließen, und die Fütterungsvorrichtung ein Übertragungsmittel (11) umfasst, das angepasst ist, um Leistung zu übertragen, die durch das Leistungsmittel (9) erzeugt wird, um jeweils das erste und das zweite Schließelement (7, 8) zu bewegen, und das Übertragungsmittel (11) mit dem Leistungsmittel (9) verbunden ist und eine drehbare Welle umfasst, die ein oder mehrere Übertragungselemente (12) daran befestigt aufweist, die eine Drehbewegung in eine lineare Bewegung umwandeln, die ein oder mehrere Aufhängungsmittel (10) aufweisen, die jeweils an einem der ersten Schließelemente (7) an einem Ende davon befestigt sind, damit verbunden, und dadurch, dass das erste und das zweite Schließelement (7, 8) angepasst sind, um vertikal gleichzeitig in der gleichen Richtung und mit der gleichen Geschwindigkeit durch ein und dasselbe Übertragungsmittel (11) und das Aufhängungsmittel (10) bewegt zu werden, wobei jedes der ersten Schließelemente (7) durch sein Aufhängungsmittel (10) aufgehängt und von oben getragen wird und die ersten Schließelemente (7) an ihrem unteren Abschnitt mit einem oder mehreren Kopplern (17) versehen sind und die zweiten Schließelemente (8) an ihrem oberen Abschnitt mit einem oder mehreren Gegenelementen (18) versehen sind, und die Koppler (17) angeordnet sind, um mit den Gegenelementen (18) zu koppeln, während die Unterkante des ersten Schließelements (7), während ihres Anhebens, die Oberkante des zweiten Schließelements (8) auf eine Weise erreicht, dass die ersten Schließelemente (7) die zweiten Schließelemente (8) mitnehmen, wenn die ersten Schließelemente (7) nach oben bewegt werden, wenn die Koppler (17) auf die Gegenelemente (18) treffen und die Koppler (17) angeordnet sind, um sich von den Gegenelementen (18) zu entkoppeln, wenn die ersten Schließelemente (7) nach unten bewegt werden, wenn die zweiten Schließelemente (8) ihre untere Position erreichen.

2. Fütterungsvorrichtung nach Anspruch 1, **dadurch gekennzeichnet, dass** die Fütterungsvorrichtung ein Führungsmittel (15) umfasst und die Schließelemente (7, 8) mit Lenkmitteln (14, 16) versehen sind, die angepasst sind, um in das Führungsmittel (15) zu passen und um die vertikale Bewegung der Schließelemente (7, 8) zu lenken.

3. Fütterungsvorrichtung nach Anspruch 1 oder 2, **dadurch gekennzeichnet, dass** die Fütterungsvorrichtung ein Steuersystem umfasst, das angepasst ist, um den Fütterungsraum (6) zu bestimmten Zeitpunkten mittels des Leistungsmittels (9), des Übertragungsmittels (11) und der Schließelemente (7, 8) automatisch zu öffnen und zu schließen.

4. Fütterungsvorrichtung nach einem der vorhergehenden Ansprüche, **dadurch gekennzeichnet, dass** die Rahmenstruktur (1) eine abgedeckte viereckige Struktur ist, die eine oder mehrere ihrer Seiten aufweist, die angepasst sind, um durch die Schließelemente (7, 8) geöffnet und geschlossen zu werden.

## Revendications

1. Dispositif d'alimentation automatique comprenant au moins une structure de cadre (1) et un espace d'alimentation (6) à l'intérieur de la structure de cadre (1) pour un aliment pour animaux, tel que du foin, **caractérisé en ce que** le dispositif d'alimentation a un ou plusieurs de ses côtés conçus pour être ouverts et fermés par au moins un premier élément de fermeture (7) et un second élément de fermeture (8), le dispositif d'alimentation automatique comprenant en outre un moyen de puissance (9) permettant de déplacer les premier et second éléments de fermeture (7, 8), les premier et second éléments de fermeture (7, 8) étant conçus pour ouvrir et fermer l'espace d'alimentation (6), et le dispositif d'alimentation comprend un moyen de transmission (11) conçu pour transmettre la puissance produite par le moyen de puissance (9) afin de déplacer chaque premier et second élément de fermeture (7, 8), et le moyen de transmission (11) est relié au moyen de puissance (9) et comprend un arbre rotatif ayant un ou plusieurs éléments de transmission (12) convertissant un mouvement de rotation en un mouvement linéaire fixé à celui-ci qui a un ou plusieurs moyens de suspension (10), chacun fixé à l'un des premiers éléments de fermeture (7) au niveau d'une de ses extrémités, relié à celui-ci, et **en ce que** les premier et second éléments de fermeture (7, 8) sont conçus pour être déplacés verticalement, simultanément, dans le même sens et à la même vitesse, par un et le même moyen de transmission (11) et le moyen de suspension (10), chacun des premiers éléments de fermeture (7) étant suspendu et porté par le haut par leur moyen de suspension (10) et les premiers éléments de fermeture (7) étant pourvus dans leur partie inférieure d'un ou plusieurs coupleurs (17) et les seconds éléments de fermeture (8) étant pourvus au niveau de leur partie supérieure d'un ou plusieurs contre-éléments (18), et les coupleurs (17) étant disposés pour s'accoupler avec les contre-éléments (18) lorsqu'un bord inférieur du premier élément de fermeture (7), lors de sa montée, atteint le bord supérieur du second élément de fermeture (8) de telle sorte que les premiers éléments de fermeture (7) entraînent les seconds éléments de fermeture (8) lorsque les premiers éléments de fermeture (7) sont déplacés vers le haut lorsque les coupleurs (17) touchent les contre-éléments (18), et les coupleurs (17) étant disposés pour se découpler des contre-éléments (18) lorsque les premiers éléments de fermeture (7) sont déplacés vers le bas lorsque les seconds éléments de fermeture (8) atteignent leur position inférieure.

2. Dispositif d'alimentation selon la revendication 1, **caractérisé en ce que** le dispositif d'alimentation comprend un moyen de guidage (15) et les éléments de fermeture (7, 8) sont pourvus de moyens de direction (14, 16) conçus pour s'adapter dans le moyen de guidage (15) et pour diriger le mouvement vertical des éléments de fermeture (7, 8).

3. Dispositif d'alimentation selon la revendication 1 ou 2, **caractérisé en ce que** le dispositif d'alimentation comprend un système de commande conçu pour ouvrir et fermer automatiquement l'espace d'alimentation (6) à des moments donnés au moyen du moyen de puissance (9), du moyen de transmission (11) et des éléments de fermeture (7, 8).

4. Dispositif d'alimentation selon l'une quelconque des revendications précédentes, **caractérisé en ce que** la structure de cadre (1) est une structure couverte à quatre angles ayant un ou plusieurs de ses côtés conçus pour être ouverts et fermés par les éléments de fermeture (7, 8).
